# FASCICULE DE BREVET EUROPEEN

(11) **EP 1 056 606 B1**
(45) Date de publication et mention de la délivrance du brevet: **08.05.2002**
(21) Numéro de dépôt: 99910220.5
(22) Date de dépôt: 12.02.1999
(51) Int. Cl.: B60C 11/01, B60C 3/04, B60C 13/02

(54) **JONCTION D'UNE BANDE DE ROULEMENT AVEC LES FLANCS D'UN PNEUMATIQUE**
VERBINDUNG EINER LAUFFLÄCHE MIT SEITENWÄNDEN EINES REIFENS
JOINT BETWEEN A TYRE TREAD AND SIDEWALLS

(30) Priorité: 20.02.1998 FR 9802168
(43) Date de publication de la demande: 06.12.2000
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: MOREL, Noel, F-63530 Enval (FR)
(74) Mandataire: Diernaz, Christian
(86) Numéro de dépôt international: EP9900906
(87) Numéro de publication internationale: WO9942307

(56) Documents cités:
- EP-A- 0 072 500
- GB-A- 2 077 671
- PATENT ABSTRACTS OF JAPAN vol. 095, no. 009, 31 octobre 1995 & JP 07 149107 A (SUMITOMO RUBBER IND LTD), 13 juin 1995
- PATENT ABSTRACTS OF JAPAN vol. 008, no. 112 (M-298), 25 mai 1984 & JP 59 020705 A (YOKOHAMA GOMU KK), 2 février 1984

## Description

L'invention concerne un pneumatique à armature de carcasse, de préférence radiale, destiné à équiper plus particulièrement un véhicule de tourisme.

Outre l'armature de carcasse, ancrée dans chaque bourrelet à au moins une tringle, ledit pneumatique comprend radicalement à l'extérieur de ladite armature de carcasse une armature de sommet composée d'au moins deux nappes de sommet dites de travail et formées d'éléments de renforcement inextensibles, parallèles entre eux dans chaque nappe et croisés d'une nappe à la suivante en faisant avec la direction circonférentielle des angles pouvant être compris entre 10° et 45°. La bande de roulement, disposée radicalement à l'extérieur de ladite armature de sommet est réunie aux deux bourrelets du pneumatique par l'intermédiaire de deux flancs de part et d'autre du plan équatorial.

Comme largement connu et utilisé, la jonction aux épaules du pneumatique, entre le mélange caoutchouteux de la bande de roulement et les deux mélanges caoutchouteux de flancs, peut être réalisée de deux manières. Une première méthode consiste à rabattre les bords radialement supérieurs des mélanges de flancs sur les bords axialement extérieures du mélange de bande de roulement. Ladite méthode exige, lors de la pose des mélanges de flancs sur le tambour cylindrique de confection de l'ébauche non vulcanisée de carcasse, le non collage des bords supérieurs des mélanges de flancs, puis le rabattement des dits bords non collés sur les ailes de mélange de bande de roulement lors de la finition de l'ébauche non vulcanisée du pneumatique. Les opérations, mentionnées ci-dessus, peuvent être dans certains cas fastidieuses.

Une deuxième méthode fréquemment utilisée consiste d'une part à rabattre les ailes de mélange de bande de roulement sur les bords supérieurs des mélanges de flancs, les dits bords étant, lors de la confection de l'cbauche de carcasse, collées aux mélanges radialement sous-jacents. La jonction entre le mélange de bande de roulement et les mélanges de flancs, qui se présente sur la paroi extérieure du flanc sous forme de cercle plus ou moins régulier, est alors recouverte d'une couche de mélange caoutchouteux ou couvre-joint, de qualité voisine de la qualité des mélanges de flancs. Cette dernière solution permet une bonne tenue de la jonction et une bonne endurance du pneumatique à ce niveau, mais exige la pose d'un produit supplémentaire, donc un désavantage certain en coût matière et coût de production.

Malgré l'effilement possible des ailes de bande de roulement de façon à faciliter leur rabattement, les matériaux utilisés pour les mélanges de bande de roulement et mélanges de flancs étant généralement fort différents et les contraintes mécaniques dues à l'écrasement du pneumatique dans l'aire de contact et imposées aux épaules dudit pneumatique étant élevées, l'usage du couvre-joint sur la jonction entre bande de roulement et flancs n'a pu être aboli, l'endurance de la jonction n'étant pas jugée suffisante pour un usage routier intensif et sévère.

L'invention a pour but de supprimer l'utilisation de couvre-joint tout en utilisant la deuxième méthode de confection de l'ébauche de pneumatique.

Le pneumatique, conforme à l'invention, avec une armature de carcasse ancrée dans chaque bourrelet à une tringle, une armature de sommet et une bande de roulement réunie à deux bourrelets par l'intermédiaire de deux flancs, les bords axialement extérieurs du mélange unique de bande de roulement étant rabattus sur les bords radialement extérieurs des mélanges caoutchouteux de flancs, est caractérisé en ce que la jonction circulaire entre l'unique mélange caoutchouteux de bande de roulement et le mélange caoutchouteux de flanc est positionnée sur la paroi axialement extérieure du pneumatique telle que son rayon R_{C} soit d'une part compris entre 0,9 R_{S} + 0,1 R_{B} et 0,8 R_{S} + 0,2 R_{B} et d'autre part compris entre R_{SS} et 0,9 R_{SS} - 0.1 R_{B}, R_{S} étant le rayon équatorial sommet de la bande de roulement. R_{SS} le rayon équatorial de la ligne moyenne de l'armature de carcasse et R_{B} le rayon du siège de bourrelet mesuré sur la perpendiculaire à l'axe de rotation du pneumatique passant par le centre de gravité de la section transversale de la tringle.

Un tel positionnement permet une diminution sérieuse des déformations subies par la jonction circulaire entre le mélange de bande de roulement et le mélange de flanc, et en conséquence une tenue de la liaison nettement améliorée.

De manière préférentielle, la jonction circulaire entre mélanges concernés est voisine d'au moins unc rainure ou gorge circonférentielle dont le rayon moyen R_{R} est compris entre R_{C} + 10 mm et R_{C} - 10 mm et dont la profondeur est comprise entre 10 et 30% de l'épaisseur totale de flanc au rayon R_{R}. Il est avantageux que la gorge ait un rayon moyen compris entre R_{C} et R_{C} - 10 mm, pour avoir une efficacité maximale. La section transversale de ladite rainure peut être demi-circulaire, ou encore avoir, vue en section méridienne, une forme qui soit la succession d'arcs de cercle.

Les caractéristiques de l'invention seront mieux comprises à l'aide de la description qui suit et qui se réfère au dessin, illustrant à titre non limitatif un exemple d'exécution et sur lequel,
la figure 1 représente schématiquement, vu en section méridienne, un pneumatique conforme à l'invention, et
la figure 2 représente schématiquement, vu en section méridienne, une variante de forme de gorge.

Le pneumatique P de dimension 175/70.R.13, comprend une armature de carcasse formée d'une seule nappe (1) d'éléments de renforcement radiaux qui sont des câbles textiles, tels que des câbles de polyamide aliphatique, ou de PET, ou de rayonne. Ladite nappe (1) s'enroule dans chaque bourrelet autour d'une tringle (2) de type tressée pour former un retournement (10). L'armature de carcasse (1) radiale est surmontée radialement à l'extérieur d'une armature de sommet (3) composée de deux nappes de travail (31) et (32) formées de câbles métalliques 6X23 NF en acier, inextensibles, parallèles entre eux dans chaque nappe et croisés d'une nappe (31) à la suivante (32) en formant avec la direction circonférentielle du pneumatique un angle α de 22°. Les bords de ladite armature de sommet (3) sont séparés de la nappe (1) de carcasse par des profilés (7) de caoutchouc, alors que les bords des nappes de travail (31) et (32) sont séparés entre eux par des coins de caoutchouc (8) de qualité adaptée. La bande de roulement (4) qui surmonte radicalement l'armature de sommet (3) est réunie de part et d'autre du plan équatorial XX' à un flanc (5) par une jonction J présentant sur la paroi axialement extérieure du pneumatique P un tracé sensiblement circulaire C ayant un rayon R_{C}. Si l'on considère le rayon R_{S} de la trace circulaire sur le plan équatorial XX' des points de la bande de roulement (4) les plus éloignés de l'axe de rotation du pneumatique, le rayon R_{SS} de la trace quasi-circulaire sur le plan équatorial XX' des points de la surface moyenne de l'armature de carcasse (1), et le rayon R_{B} du siège de bourrelet mesuré dans un plan parallèle au plan équatorial XX' et passant par le centre de gravité de la section de la tringle (2), le rayon R_{C} est égal à 268 mm, soit d'une part égal à 0,83 R_{S} + 0,17 R_{B} étant donné que R_{S} est égal à 289 mm et R_{B} à 163 mm, et soit d'autre part égal à 0,93 R_{SS} + 0,07 R_{B} étant donné que R_{SS} est égal, pour la dimension étudiée, à 275 mm.

Radialement à l'intérieur du tracé circulaire C est disposée une rainure (6), de section transversale demi-circulaire, et dont l'axe moyen ZZ', vu en section méridienne, intersecte la paroi latérale du pneumatique en un point de rayon R_{R} inférieur au rayon R_{C} d'une quantité égale à 6 mm. Ladite rainure (6) a une profondeur, qui correspond dans le cas présent à un rayon r, de 2,0 mm, qui est égal à 25% de l'épaisseur e du flanc du pneumatique, mesurée sur l'axe ZZ' et égale à 8 mm. La rainure (6), proche de la jonction J, permet une diminution supplémentaire des déformations sur le flanc du pneumatique au niveau de ladite jonction entre mélange de bande de roulement et mélange de flanc.

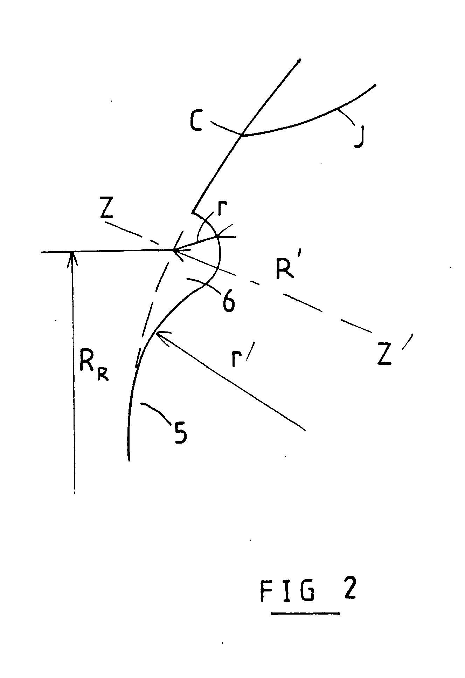

Sur la figure 2 est montrée une autre forme de gorge circonférentielle (6), qu'il est possible de définir par la succession de deux arcs de cercle vus en section méridienne : un premier arc de cercle radialement supérieur concave, de rayon r et de longueur comprise entre πr/2 et πr, prolongé tangentiellement par un deuxième arc de cercle convexe, dont le rayon de courbure r' est compris entre r et R', R' étant le rayon de courbure de la paroi extérieure du flanc mesurée au rayon R_{R}, ledit deuxième arc de cercle étant aussi tangent à ladite paroi extérieure. Dans le cas décrit le rayon r est de 2 mm, alors que le rayon r' est de 50 mm, R' étant égal à 80 mm.

Il est possible, si nécessaire, d'ajouter une deuxième rainure, du même type que la rainure (6), disposée radialement à l'extérieur de la jonction J et sensiblement à la même distance radiale de ladite jonction.

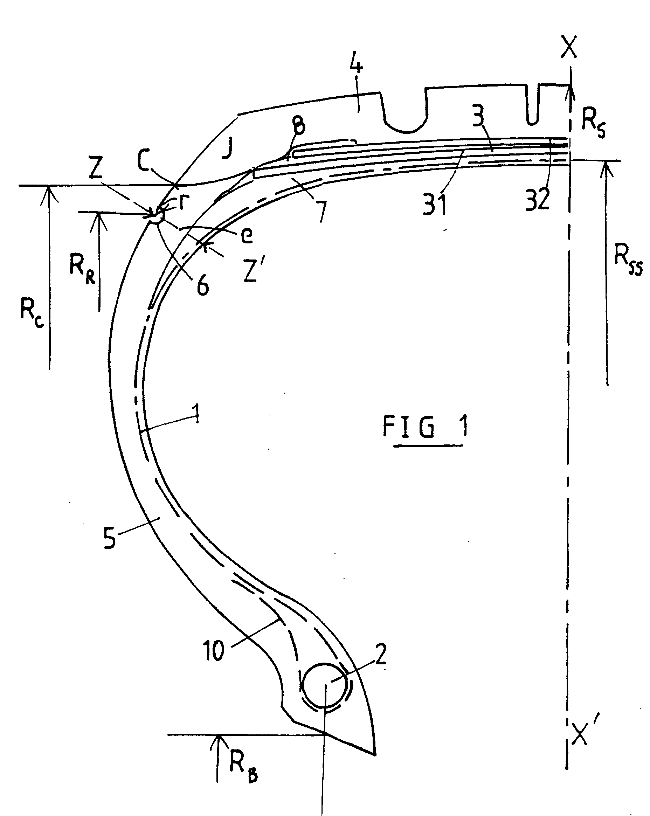

Des essais effectués sur des pneumatiques conformes à l'invention (figure 1) témoignent de la bonne tenue en endurance de la jonction entre la bande de roulement et les flancs du pneumatique, aussi en roulage avec surcharge qu'en roulage sous ambiance ozonée. La présence d'une rainure permet une diminution des déformations subies par la jonction et des pneumatiques ainsi conçus ont réalisé des kilométrages, avant apparition d'une amorce de décollement en roulage sous ambiance ozonée, 1,5 fois plus élevés que ceux effectués par des pneumatiques ne comportant pas de rainures.

## Revendications

1. Pneumatique P avec une armature de carcasse (1) ancrée dans chaque bourrelet à une tringle (2), une armature de sommet (3) et une bande de roulement (4) réunie à deux bourrelets par l'intermédiaire de deux flancs (5), les bords axialement extérieurs du mélange unique de bande de roulement (4) étant rabattus sur les bords radialement extérieurs des mélanges caoutchouteux de flancs (5), **caractérisé en ce que** la jonction circulaire J entre l'unique mélange caoutchouteux de bande de roulement (4) et le mélange caoutchouteux de flanc (5) est positionnée telle que son rayon R_{C} sur la paroi axialement extérieure du pneumatique P soit, d'une part compris entre 0,9 R_{S} + 0,1 R_{B} et 0,8 R_{S} + 0,2 R_{B} et d'autre part compris entre R_{SS} et 0,9 R_{SS} + 0,1 R_{B}, R_{S} étant le rayon équatorial sommet de la bande de roulement, R_{SS} le rayon équatorial de la ligne moyenne de l'armature de carcasse et R_{B} le rayon du siège de bourrelet mesuré sur la perpendiculaire à l'axe de rotation du pneumatique passant par le centre de gravité de la section transversale de la tringle (2).

2. Pneumatique selon la revendication 1, **caractérisé en ce que** la jonction circulaire J entre mélanges concernés est voisine d'au moins une rainure ou gorge circonférentielle dont le rayon moyen R_{R} est compris entre R_{C} + 10 mm et Rc - 10 mm, et dont la profondeur est comprise entre 10 et 30% de l'épaisseur totale de flanc au rayon R_{R}.

3. Pneumatique selon la revendication 2, **caractérisé en ce que** la section transversale de ladite rainure (6) est demi-circulaire.

4. Pneumatique selon la revendication 2, **caractérisé en ce que** la section transversale de la rainure (6) a une forme définie par la succession de deux arcs de cercle : un premier arc de cercle radialement supérieur concave, de rayon r et de longueur comprise entre πr/2 et πr, prolongé tangentiellement par un deuxième arc de cercle convexe, dont le rayon de courbure r' est compris entre r et R', R' étant le rayon de courbure de la paroi extérieure du flanc mesurée au rayon R_{R}, ledit deuxième arc de cercle étant aussi tangent à ladite paroi extérieure.

## Patentansprüche

1. Luftreifen P mit einer Karkassenbewehrung (1), die in jedem Wulst an einem Wulstkem (2) verankert ist, einer Scheitelbewehrung (3) und einer Lauffläche (4), die mit zwei Wülsten über zwei Flanken (5) verbunden ist, wobei die axial äußeren Ränder der einzigen Laufflächenmischung (4) auf die radial äußeren Ränder der Flanken-Kautschukmischungen (5) umgeschlagen sind, **dadurch gekennzeichnet, daß** die kreisförmige Verbindungsstelle J zwischen der einzigen Laufflächen-Kautschukmischung (4) und der Flanken-Kautschukmischung (5) so positioniert ist, daß ihr Radius R_{C} auf der axial äußeren Wand des Luftreifens P einerseits zwischen 0,9Rₛ + 0,1R_{B} und 0,8Rₛ + 0,2R_{B} und andererseits zwischen Rss und 0,9Rₛₛ - 0,1R_{B} liegt, wobei Rₛ der äquatoriale Scheitelradius der Lauffläche, Rss der Äquatorialradius der Mittellinie der Karkassenbewehrung und R_{B} der Radius des Wulstsitzes ist, gemessen auf der Senkrechten zur Drehachse des Luftreifens, die durch den Schwerpunkt des Querschnitts des Wulstkerns (2) verläuft.

2. Luftreifen nach Anspruch 1, **dadurch gekennzeichnet, daß** die kreisförmige Verbindungsstelle J sich zwischen den betreffenden Mischungen nahe mindestens einer Umfangsnut oder -kehle befindet, deren mittlerer Radius R_{R} zwischen R_{C} + 10 mm und R_{C} - 10 mm liegt, und deren Tiefe zwischen 10 und 30% der Gesamtdicke der Flanke mit dem Radius R_{R} ist.

3. Luftreifen nach Anspruch 2, **dadurch gekennzeichnet, daß** der Querschnitt der Nut (6) halbkreisförmig ist.

4. Luftreifen nach Anspruch 2, **dadurch gekennzeichnet, daß** der Querschnitt der Nut (6) eine Form hat, die durch die Folge von zwei Kreisbogen definiert wird: einem ersten, radial oberen, konkaven Kreisbogen mit einem Radius r und einer Länge zwischen πr/2 und πr, tangential verlängert durch einen zweiten, konvexen Kreisbogen, dessen Krümmungsradius r' zwischen r und R' liegt, wobei R' der Krümmungsradius der Außenwand der Flanke gemessen am Radius R_{R} ist, wobei der zweite Kreisbogen auch die Außenwand tangiert.

## Claims

1. A tyre P comprising a carcass reinforcement (1) anchored within each bead to a bead wire (2), a crown reinforcement (3) and a tread (4) joined to two beads by means of two sidewalls (5), the axially outer edges of the single mix of the tread (4) being folded over on to the radially outer edges of the rubber mixes of the sidewalls (5), **characterised in that** the circular junction J between the sole rubber mix of the tread (4) and the rubber mix of the sidewall (5) is positioned such that its radius R_{C} on the axially outer wall of the tyre P lies firstly between 0.9 R_{S} + 0.1 R_{B} and 0.8 R_{S} + 0.2 R_{B} and secondly between R_{SS} and 0.9 R_{SS} + 0.1 R_{B}, R_{S} being the equatorial crown radius of the tread, R_{SS} the equatorial radius of the centre line of the carcass reinforcement and R_{B} the radius of the bead seat measured on the line perpendicular to the axis of rotation of the tyre passing through the centre of gravity of the cross-section of the bead wire (2).

2. A tyre according to Claim 1, **characterised in that** the circular junction J between the mixes in question is close to at least one circumferential groove or channel, the mean radius R_{R} of which is between R_{C} + 10 mm and R_{C} - 10 mm, and the depth of which is between 10 and 30% of the total sidewall thickness at the radius R_{R}.

3. A tyre according to Claim 2, **characterised in that** the cross-section of said groove (6) is semicircular.

4. A tyre according to Claim 2, **characterised in that** the cross-section of the groove (6) has a form defined by the succession of two arcs of a circle: a first, radially upper, concave, arc of a circle, of radius r and of a length of between πr/2 and πr, extended tangentially by a second, convex, arc of a circle, the radius of curvature r' of which lies between r and R', R' being the radius of curvature of the outer wall of the sidewall measured at the radius R_{R}, said second arc of a circle also being tangent to said outer wall.
